# DEMANDE DE BREVET EUROPEEN

(11) **EP 0 537 077 A1**
(43) Date de publication de la demande: **14.04.1993**
(21) Numéro de dépôt: 92402756.8
(22) Date de dépôt: 08.10.1992
(51) Int. Cl.: F16L 55/124, F16K 7/10

(54) **Dispositif d'obturation provisoire d'une canalisation transportant un fluide quelconque**

(30) Priorité: 09.10.1991 FR 9112444
(71) Demandeur: GAZ DE FRANCE, F-75017 Paris (FR)
(72) Inventeur: Pfeiffer, Dominique, F-60950 Ermenonville (FR); Wartel, Christian, F-75020 Paris (FR)
(74) Mandataire: Durand, Yves Armand Louis

(57) **Abrégé**

La présente invention concerne un dispositif d'obturation provisoire d'une canalisation véhiculant un fluide quelconque.

Ce dispositif comprend essentiellement une enceinte gonflable (5) associée à une armature (6) coopérant avec la paroi interne (1a) d'une canalisation (1) et montée articulée sur la tige (9) d'un vérin (11), de manière que l'enceinte (5) puisse être introduite positivement et suivant le bon sens dans la canalisation (1) et puisse, après gonflage, être retenue mécaniquement et positivement dans sa position d'obturation de la canalisation (1).

Ce dispositif s'applique notamment à l'obturation temporaire de canalisations transportant du gaz.

## Description

La présente invention a essentiellement pour object un dispositif d'obturation provisoire d'une canalisation véhiculant un fluide quelconque, tel que par exemple du gaz.

On a déjà proposé d'obturer provisoirement une conduite sur laquelle il convient de pratiquer une intervention, à l'aide d'un ballon ou d'une vessie gonflable.

Plus précisément, après avoir réalisé dans le sol une fouille permettant la mise à jour de la conduite, on fixe sur cette conduite un système formant sas qui permet le perçage puis l'introduction de l'enceinte dégonflée dans la conduite, de sorte qu'après gonflage, l'enceinte pourra obturer la conduite le temps qu'il faudra pour l'intervention.

Jusqu'à présent, l'enceinte formant obturateur de conduite était introduite manuellement dans ladite conduite, pour être gonflée ensuite afin d'obturer le plus complètement possible la section de passage interne de celle-ci.

Mais cette façon artisanale de procéder présentait un certain nombre d'inconvénients. Tout d'abord, l'introduction de l'enceinte gonflable dans la canalisation était difficile et périlleuse en raison de la pression du fluide dans la canalisation depuis l'amont vers l'aval. Sous l'effet de la pression, l'enceinte gonflable a évidemment tendance, une fois introduite par le perçage à être poussée vers l'aval du perçage, ce qui risque évidemment de produire des fuites dangereuses de fluide vers l'extérieur par ce perçage, alors qu'il conviendrait que l'enceinte gonflable soit introduite dans la canalisation vers l'amont, c'est-à-dire en amont du perçage pour, après gonflage et obturation, éviter tout échappement du fluide vers l'extérieur.

En outre, l'introduction puis le retrait de la vessie ou du ballon, généralement de diamètre important, nécessitaient la présence de deux personnes devant fournir un effort manuel assez important.

Aussi, la présente invention a pour but de remédier notamment aux inconvénients ci-dessus en proposant un dispositif d'obturation provisoire présentant une grande fiabilité sur le plan de l'introduction de l'enceinte dans la canalisation et sur ce.lui de la sûreté pour ce qui est de l'étanchéité réalisée par l'enceinte gonflée et du risque de fuites de fluide vers l'extérieur.

A cet effet, l'invention a pour objet un dispositif d'obturation provisoire d'une canalisation enterrée véhiculant un fluide quelconque tel que du gaz et du type comprenant une enceinte gonflable susceptible de pénétrer par un perçage dans ladite canalisation pour pouvoir, après gonflage, obturer cette dernière, caractérisé en ce qu'à ladite enceinte est associée une armature coopérant avec la paroi interne de la canalisation pour que l'enceinte puisse être introduite positivement dans cette canalisation et puisse, après gonflage, être retenue mécaniquement dans sa position d'obturation de ladite canalisation.

Suivant une autre caractéristique de ce dispositif, l'armature précitée est montée articulée sur une tige ou analogue, appartenant par exemple à un vérin, insérable au travers d'un trou de forage créé dans le sol au-dessus de la canalisation.

On précisera encore ici que, suivant une autre caractéristique de l'invention, l'articulation entre l'armature et la tige est une articulation à débattement limité permettant l'orientation et l'introduction de l'ensemble armature-enceinte dans la canalisation suivant une direction privilégiée.

Le dispositif selon cette invention est encore caractérisé en ce que l'armature est formée d'au moins un bras ou analogue traversant de façon étanche l'enceinte, dont une extrémité est articulée sur la tige précitée et dont l'autre extrémité comporte un patin ou analogue susceptible de coopérer avec la paroi interne de la canalisation.

Il est encore prévu, dans le dispositif de cette invention, une conduite d'amenée de fluide de gonflage à l'enceinte via l'articulation précitée, laquelle conduite est solidaire de la tige et du vérin précités.

Mais d'autres caractéristiques et avantages de l'invention apparaîtront mieux dans la description détaillée qui suit et se réfère à la figure unique annexée montrant schématiquement et en élévation un dispositif conforme à l'invention et équipé d'une enceinte gonflable représentée en position introduite dans une conduite.

En se référant à la figure, on voit en 1 une canalisation véhiculant un fluide, tel que par exemple du gaz, suivant le sens indiqué par la flèche F, cette conduite étant enfouie dans le sol S.

Si une intervention sur la conduite s'avère nécessaire, on réalise dans le sol S une fouille ou un trou de forage comme montré en 2, lequel trou peut être éventuellement étayé par un fourreau, berceau ou analogue 3.

Le trou de forage 2 étant réalisé jusqu'à la mise à jour de la conduite 1, on réalise alors, également à l'aide d'un outillage approprié et non représenté, un perçage dans la conduite 1, comme on le voit en 4. C'est au travers du perçage 4 et via le trou de forage 2 que sera introduit le dispositif selon cette invention qui sera décrit en détail ci-après et qui permet l'obturation provisoire de la conduite 1 pour pouvoir procéder à une intervention sur ladite conduite.

Comme on le voit sur la figure, ce dispositif comprend essentiellement une enceinte gonflable 5 revêtant la forme d'un ballon ou d'une vessie en matière élastique à laquelle est associée une armature 6 permettant avantageusement, et, comme on le décrira plus loin, d'introduire positivement l'enceinte 5 dans la conduite ou canalisation 1 et permettant, après gonflage, la retenue mécanique et positive de ladite enceinte dans sa position d'obturation de la conduite 1.

Suivant l'exemple de réalisation représenté, l'enceinte 5 pourra être constituée d'une enveloppe extérieure 5a en matière élastique étanche et d'une housse interne 5b en matière poreuse souple et peu extensible.

L'armature 6 rigide ou semi-rigide pourra être réalisée en toute matière métallique ou synthétique appropriée et revêtir une forme quelconque susceptible de s'intégrer adéquatement à la forme de l'enceinte gonflable 5. Suivant l'exemple de réalisation représenté, l'armature 6 est constituée par au moins un bras 7 traversant de façon étanche l'enceinte gonflable 5, ledit bras possédant une extrémité 7a articulée par l'intermédiaire d'une articulation 8 sur une tige 9 associée au piston 10 d'un vérin 11. L'autre extrémité 7b du ou des bras 7 comporte un élément 12 formant patin susceptible de coopérer avec la paroi interne la de la canalisation 1.

L'articulation 8 entre armature 6 et tige 9 sera, suivant l'invention, une articulation unidirectionnelle par rapport à l'axe de la conduite 1, c'est-à-dire une articulation à débattement limité permettant l'introduction de l'armature 6 et de son enceinte associée 5 dans la canalisation 1 suivant une direction privilégiée vers la droite ou vers la gauche après passage au travers du perçage 4.

L'articulation 8 peut être réalisée à l'aide de moyens appropriés quelconques et non représentés. Il peut s'agir par exemple d'une articulation revêtant la forme d'une charnière pourvue d'une butée par exemple de façon que .l'un des éléments de la charnière, à savoir celui solidaire de l'armature 6 ne puisse se débattre par rapport à l'autre que sur un angle inférieur à 180°, de sorte qu'une fois l'ensemble armature 6 - enceinte 5 introduit dans la conduite 1 via le perçage 4, ledit ensemble fera un angle par rapport à l'axe de la conduite 1 qui sera tel qu'à l'appui du patin 12 sur la paroi interne la de ladite conduite, ledit ensemble sera nécessairement orienté et guidé dans celle-ci vers la droite ou vers la gauche en fonction du sens de l'écoulement du fluide dans la conduite 1, comme on l'expliquera en détail plus loin.

On a montré en 13 sur la figure une conduite souple d'amenée de fluide de gonflage à l'enceinte 5, ladite conduite passant par l'articulation 8 et étant de préférence solidaire de la tige 9 et du corps de vérin 11 par tout moyen approprié quelconque. On observera que le corps du vérin 11 peut être fixé rigidement par tout moyen approprié, tel qu'une bride 14, au fourreau ou berceau 3, lui-même inséré dans le trou de forage 2.

Le corps du vérin 11 comporte bien entendu et comme connu en soi une entrée et une sortie de fluide montrée schématiquement en 15, tandis que la conduite 13 peut être, également comme connu en soi, reliée à une source de fluide apte à gonfler l'enceinte 5.

Mais, pour une meilleur compréhension de l'invention, on décrira brièvement ci-après le fonctionnement du dispositif qui vient d'être décrit.

Après réalisation du trou de forage dans le sol S et après insertion du fourreau 3 dans ce trou et perçage en 4 de la canalisation 1, comme expliqué précédemment, on procède à la fixation du vérin 11 dans ledit fourreau.

A ce stade, le piston 10 sera remonté dans le corps du vérin 11, de sorte que l'ensemble armature 6 - enceinte 5 sera en quelque sorte logé dans le corps du vérin 11.

On observera ici qu'à ce stade, l'articulation 8 aura été convenablement indexée suivant le sens de l'écoulement du fluide, tel que du gaz, dans la canalisation 1, étant entendu que l'enceinte gonflable 5 devra se diriger vers l'amont de la conduite, c'est-à-dire à l'encontre de la pression du fluide suivant F dans cette conduite, pour éviter toute fuite via le perçage 4.

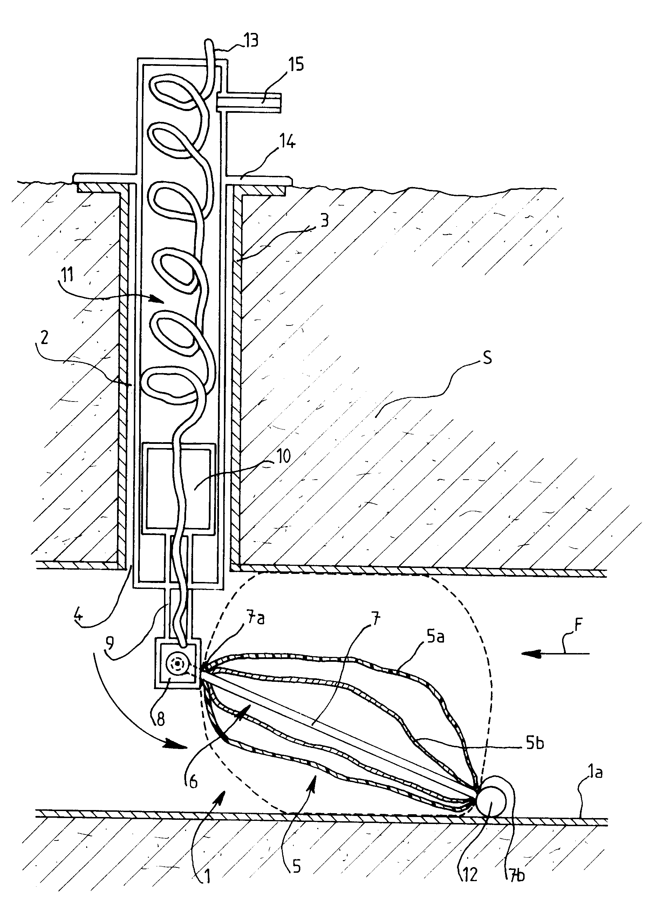

Ainsi, comme on le voit sur la figure, lorsqu'un fluide, par exemple hydraulique, sera injecté dans le corps du vérin 11, l'équipage piston 10, tige 9, articulation 8, armature 6 et enceinte 5 sortira du corps du vérin et l'articulation 8 sera indexée de telle manière que le patin 12 prenne appui sur la paroi 1a de la conduite 1 vers la droite de l'axe du vérin 11 et de la tige 9. Autrement dit, l'ensemble armature 6 - enceinte 5 sera positivement et nécessairement orienté vers la droite de la figure 1, et, après gonflage de l'enceinte 5 via la conduite 13, non seulement ladite enceinte obturera la canalisation 1, mais l'armature 6 associée à l'enceinte 5 retiendra positivement ladite enceinte dans sa position l'obturation, pour permettre l'intervention désirée sur la canalisation.

Lorsque l'intervention sera terminée, il suffira, après dégonflage de l'enceinte 5, de faire remonter le piston 10 et donc l'ensemble armature 6 - enceinte 5 dans le corps du vérin 11, puis le perçage 4 sera bouché par un outillage approprié, et on comblera alors le trou de forage 2, étant entendu que toutes ces opérations pourront se faire par l'intermédiaire d'un sas, comme connu en soi.

On a donc réalisé suivant l'invention un dispositif d'obturation provisoire d'une conduite qui permet l'introduction positive et dans le bon sens d'une enceinte gonflable dans une canalisation et qui permet également la retenue positive et mécanique de l'enceinte, après gonflage, dans sa position d'obturation de ladite canalisation, de sorte qu'une intervention sur celle-ci peut être réalisée en toute sécurité.

L'obturation provisoire d'une canalisation à l'aide de ce dispositif pourra être réalisée sur tout type de chantier en milieu urbain ou non et sur tout type de canalisation véhiculant un fluide sous pression, la sécurité des opérations d'obturation, éventuellement actionnées et contrôlées à distance, étant quasiment totale.

Bien entendu, l'invention n'est nullement limitée au mode de réalisation décrit et illustré qui n'a été donné qu'à titre d'exemple.

C'est ainsi que l'articulation à débattement limité et/ou indexée entre tige 9 et armature 6 peut être d'une conception quelconque, de même qu'un moyen autre qu'un vérin pourrait être prévu pour introduire l'ensemble armature - enceinte gonflable dans la canalisation à obturer.

L'invention comprend donc tous les équivalents techniques des moyens décrits ainsi que leurs combinaisons si celles-ci sont effectuées suivant son esprit.

## Revendications

1. Dispositif d'obturation provisoire d'une canalisation enterrée (1) véhiculant un fluide quelconque tel du gaz et du type comprenant une enceinte gonflable (5) susceptible de pénétrer par un perçage (4) dans la canalisation, et à laquelle est associée une armature (6), caractérisé en ce que ladite armature est montée articulée sur une tige ou analogue (9) appartenant à un vérin (11) insérable au travers d'un trou de forage (2) créé dans le sol (S) au-dessus de la canalisation (1), et en ce que l'articulation (8) entre l'armature (6) et la tige (9) est une articulation à débattement limité permettant l'orientation et l'introduction de l'ensemble armature (6) - enceinte (5) dans la canalisation (1) suivant une direction privilégiée.

2. Dispositif selon la revendication 1 caractérisé en ce que l'armature précitée (6) comprend au moins un bras ou analogue (7) traversant de façon étanche l'enceinte (5), dont une extrémité (7a) est articulée sur la tige précitée (9) et dont l'autre extrémité (7b) comporte un patin ou analogue (12) susceptible de coopérer avec la paroi interne (1a) de la canalisation (1).

3. Dispositif selon la revendication 1 ou 2, caractérisé par une conduite (13) d'amenée de fluide de gonflage à l'enceinte (5) via l'articulation précitée (8), laquelle conduite est solidaire de la tige (9) et du vérin (11) précités.
